(19) Europäisches Patentamt / European Patent Office / Office européen des brevets

(11) **EP 1 979 430 B1**

(12) **EUROPÄISCHE PATENTSCHRIFT**

(45) Veröffentlichungstag und Bekanntmachung des Hinweises auf die Patenterteilung:
**15.12.2010 Patentblatt 2010/50**

(21) Anmeldenummer: **07704072.3**

(22) Anmeldetag: **23.01.2007**

(51) Int Cl.:
***C09J 133/00*** *(2006.01)*

(86) Internationale Anmeldenummer:
**PCT/EP2007/050637**

(87) Internationale Veröffentlichungsnummer:
**WO 2007/085588 (02.08.2007 Gazette 2007/31)**

(54) **AUTO-ADHÄSIVER KLEBSTOFF**

AUTOADHESIVE

MATIERE AUTO-ADHESIVE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **30.01.2006 EP 06101011**
**30.03.2006 EP 06112021**

(43) Veröffentlichungstag der Anmeldung:
**15.10.2008 Patentblatt 2008/42**

(73) Patentinhaber: **BASF SE**
**67056 Ludwigshafen (DE)**

(72) Erfinder:
- **WULFF, Dirk**
  **67105 Schifferstadt (DE)**
- **WEISS, Axel**
  **67346 Speyer (DE)**
- **TORRES LLOSA, Jose Maria**
  **67071 Ludwigshafen (DE)**
- **ARISANDY, Christofer**
  **68163 Mannheim (DE)**

(56) Entgegenhaltungen:
**US-A- 5 492 944**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft die Verwendung einer nicht oder wenig klebrigen Zusammensetzung als Klebstoff, der mit sich selbst verklebt werden kann (im nachfolgen kurz autoadhäsiver Klebstoff genannt), für die Heiß- oder Kaltversiegelung, wobei "wenig klebrig" bedeutet, dass ein mit der Zusammensetzung beschichteter Polyethylentherephthalatträger auf Stahl bei 20 °C eine Haftung von kleiner 0,5 N/2,5 cm hat.

Haftklebstoffe sind permanent klebrig. Für viele Anwendungen sind mit Klebstoff beschichtete Substrate gewünscht, die bei Lagerung und Transport zunächst nicht klebrig, d. h. blockfest, sind. Bekannt sind z. B. Schmelzklebstoffe, die bei Raumtemperatur nicht klebrig sind und erst bei hohen Temperaturen verarbeitet werden.

Mehrstufig aufgebaute Emulsionspolymerisate für die Verwendung als Klebstoff sind z. B. in EP-A 1 420 055 beschrieben. Offenbart wird insbesondere auch ein durch mehrstufige Polymerisation erhaltenes Copolymerisat von Butylacrylat (BA) und Methylmethacrylat (MMA). In einer ersten Stufe werden BA und MMA copolymerisiert, dem erhaltenen Produkt wird nach 15 Minuten (bei 90 °C) weiteres MMA ohne Initiator zugesetzt. MMA diffundiert in das Copolymerisat und polymerisiert dort aus (auch Quellungspolymerisation genannt). Das nach der Quellungspolymerisation erhaltene Copolymer ist klebrig.

Aufgabe der vorliegenden Erfindung waren blockfeste Klebstoffe, die nur unter bestimmten Bedingungen klebrig sind. Die Bedingungen sollen möglichst moderat sein. Im übrigen sollen die Klebstoffe gute anwendungstechnische Eigenschaften haben.

Demgemäß wurde die eingangs definierte Verwendung gefunden.

Die erfindungsgemäß verwendete Zusammensetzung ist bei Raumtemperatur nicht oder wenig klebrig.

Ein mit der Zusammensetzung beschichteter Polyesterträger (Polyethylentherephthalat, PET) hat auf Stahl bei 20 °C eine Haftung von kleiner 0,5 N/2,5 cm, besonders bevorzugt kleiner 0,2 N/2,5 cm.

Die Haftung wird dabei nach folgender Meßmethode bestimmt (Quickstick-Wert): Die Dispersionen bzw. Lösungen des Polymeren werden auf 25 mm breite Stücke PET-Folie mit 30 g/m2 (fest) aufgerakelt und 3 Minuten bei 90 °C getrocknet.

Zur Bestimmung des Quickstick-Werts wurde aus einem 17,5 cm langen und 2,5 cm breiten Prüfstreifen durch Einspannen beider Enden in die Klemmbacken einer Zugmaschine eine Schlaufe gebildet, die dann mit einer chromierten Stahloberfläche mit einer Geschwindigkeit von 30 cm/min (Herabsenken der Schlaufe auf das chromierte Stahlblech) in Kontakt gebracht wird. Nach vollflächigem Kontakt wird die Schlaufe nach einer Kontaktzeit von 1 Minute wieder abgezogen und die dabei ermittelte Maximalkraft in N/2,5 cm als Maß für den Quickstick-Wert bestimmt. Die Messung wird bei 20 °C und 50 % relativer Luftfeuchtigkeit durchgeführt.

Der erhaltene Wert ist ein Maß für die Haftung und damit für die Klebrigkeit.

Entsprechend hat ein mit der Zusammensetzung beschichteter PET-Träger auf Stahl bei 20 °C auch eine Schälfestigkeit kleiner 0,5 N/2,5 cm, besonders bevorzugt kleiner 0,2 N/2,5 cm; die Schälfestigkeit wird nach folgender Meßmethode bestimmt:

Die Herstellung der Prüfstreifen erfolgt wie vorstehend beschrieben. Zur Bestimmung der Schälfestigkeit (Adhäsion) wird ein 2,5 cm breiter Prüfstreifen auf ein chromiertes V2A-Prüfblech geklebt und mit einer 1 kg schweren Rolle 1 mal angerollt. Er wird dann mit einem Ende in die oberen Backen einer Zug-Dehnungs-Prüfapparatur eingespannt. Der Klebestreifen wird mit 300 mm/min unter einem 180 ° Winkel von der Prüffläche (V2A-Stahl) abgezogen d. h. der Klebestreifen wurde umgebogen und parallel zum Prüfblech abgezogen und der dazu benötigte Kraftaufwand gemessen. Das Maß für die Schälfestigkeit ist die Kraft in N/2,5 cm, die sich als Durchschnittswert aus fünf Messungen ergab (entspricht AFERA Standard Methode). Die Schälfestigkeit wird sofort nach der Verklebung bestimmt.

Vorzugsweise enthält die Zusammensetzung eine wässrige Polymerdispersion als Bindemittel.

Das in der Dispersion dispergierte Polymer ist durch radikalische Polymerisation von ethylenisch ungesättigten Verbindungen (Monomere) erhältlich.

Das Polymer besteht vorzugsweise zu mindestens 60 Gew.-%, bevorzugt zu mindestens 80 Gew.-%, besonders bevorzugt zu mindestens 90 Gew.-% aus sogenannten Hauptmonomeren.

Die Hauptmonomeren sind ausgewählt aus $C_1$-$C_{20}$-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren.

Zu nennen sind z. B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z. B. Vinyllaurat, -stearat, Vinylpropionat, Versaticsäurevinylester und Vinylacetat.

Als vinylaromatische Verbindungen kommen Vinyltoluol, a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z. B. Vinylmethylether oder Vinylisobutylether. Bevorzugt wird Vinylether von 1 bis 4 C-Atome enthaltenden Alkoholen.

Als Kohlenwasserstoffe mit 4 bis 8 C-Atomen und zwei olefinischen Doppelbindungen seien Butadien, Isopren und Chloropren genannt.

Als Hauptmonomere bevorzugt sind die $C_1$- bis $C_{10}$-Alkylacrylate und -methacrylate, insbesondere $C_1$- bis $C_8$-Alkylacrylate und -methacrylate und Vinylaromaten, insbesondere Styrol und deren Mischungen.

Ganz besonders bevorzugt sind Methylacrylat, Methylmethacrylat, Ethylacrylat, n-Butylacrylat, n-Hexylacrylat, Octylacrylat und 2-Etyhlhexylacrylat, Styrol sowie Mischungen dieser Monomere.

Neben den Hauptmonomeren kann das Polymer weitere Monomere enthalten, z. B. Monomere mit Carbonsäure, Sulfonsäure oder Phosphonsäuregruppen. Bevorzugt sind Carbonsäuregruppen. Genannt seien z. B. Acrylsäure, Methacrylsäure, Itaconsäure, Maleinsäure oder Fumarsäure.

Weitere Monomere sind z. B. auch Hydroxylgruppen enthaltende Monomere, insbesondere $C_1$-$C_{10}$-Hydroxyalkyl(meth)acrylate, (Meth)acrylamid.

Als weitere Monomere seien darüber hinaus Phenyloxyethylglykolmono- (meth-)acrylat, Glycidylacrylat, Glycidylmethacrylat, Amino- (meth-)acrylate wie 2-Aminoethyl-(meth)acrylat genannt.

Als weitere Monomere seien auch vernetzende Monomere genannt.

Das Polymer enthält in einer bevorzugten Ausführungsform hydrophile Gruppen ausgewählt aus Carboxylgruppen, Hydroxylgruppen, Aminogruppen und Carbonsäureamidgruppen. Der Gehalt dieser hydrophilen Gruppen beträgt insbesondere 0,001 bis 0,5 Mol auf 100 g Polymer. Vorzugsweise ist der Gehalt mindestens 0,005 Mol besonders bevorzugt mindestens 0,008 Mol und maximal 0,2 Mol insbesondere maximal 0,1 Mol, ganz besonders bevorzugt maximal 0,05 bzw. 0,03 Mol auf 100 g/Polymer.

Besonders bevorzugt sind die hydrophilen Gruppen, ausgewählt aus Carboxylgruppen, Hydroxylgruppen und Carbonsäureamidgruppen.

Besonders bevorzugt handelt es sich bei mindestens 20 Mol-% der Gesamtmolmenge dieser Gruppen um Carboxylgruppen.

Unter Carboxylgruppen werden sowohl Carbonsäuregruppen als auch deren Salze verstanden. Im Falle der Salze handelt es sich bevorzugt um Salze mit flüchtigen Basen, z. B. Ammoniak.

Die hydrophilen Gruppen können durch Copolymerisation der entsprechenden Monomere an das Polymer gebunden werden.

Bevorzugte Monomere mit hydrophilen Gruppen sind die oben genannten Monomere mit Carboxylgruppen und Hydroxylgruppen, insbesondere z. B. Acrylsäure.

Insbesondere ist das Polymer zu mindestens 60 Gew.-%, besonders bevorzugt zu mindestens 80 Gew.-% und ganz besonders bevorzugt zu mindestens 95 Gew.-% aus $C_1$ bis $C_{20}$ Alkyl(meth)acrylaten aufgebaut.

Das Polymer hat vorzugsweise eine nach Fox aus der Monomerzusammensetzung berechnete Glasübergangstemperatur von -50 bis + 10 °C , besonders bevorzugt von -40 bis +5 °C.

Die Glasübergangstemperatur wird nach der Fox-Gleichung aus der Glasübergangstemperatur, der Homopolymerisate der im Copolymerisat vorhandenen Monomeren und deren Gewichtsanteil berechnet:

$$1/Tg = xA/TgA + xB/TgB + .xC/TgC + ........$$

Tg: berechnete Glasübergangstemperatur des Copolymeren
TgA: Glasübergangstemperatur des Homopolymeren von Monomer A
TgB, Tg entsprechend für Monomere B, C, etc.
xA: Masse Monomer A/Gesamtmasse Copolymer,
xB, xC entsprechend für Monomere B, C etc.

Die Fox-Gleichung ist in üblichen Fachbüchern angegeben, z. B. auch in Handbook of Polymer Science and Technology, New York, 1989 by Marcel Dekker, Inc.

Die Herstellung der Polymere erfolgt in einer bevorzugten Ausführungsform durch Emulsionspolymerisation, es handelt sich daher um ein Emulsionspolymerisat.

Bei der Emulsionspolymerisation werden ionische und/oder nicht-ionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Schutzkolloide in Betracht kommen z. B. amphiphile Polymere, also Polymere mit hydrophoben und hydrophilen Gruppen. Es kann sich um natürliche Polymere, wie Stärke oder um künstliche Polymere, wie hydrophil modifizierte Polyolefine, z. B. Acrylsäure/Ethylen-Copolymere handeln. Als Emulgatoren kommen sowohl an-ionische, kationische als auch nichtionische Emulgatoren in Betracht. Vorzugsweise werden als begleitende grenzflächenaktive Substanzen ausschließlich Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z. B. ethoxylierte Fettalkohole (EO-Grad: 3 bis 50, Alkylrest: $C_8$-bis $C_{36}$), ethoxylierte Mono-, Di- und Tri-Alkylphenole (EO-Grad: 3 bis 50, Alkylrest: $C_4$-bis $C_9$), Alkalimetallsalze von Dialkylestern der Sulfobernsteinsäure sowie Alkali- und Ammoniumsalze von Alkyl-sulfaten (Alkylrest: $C_8$- bis $C_{12}$), von ethoxylierten Alkanolen (EO-Grad: 4 bis 30, Alkylrest: $C_{12}$- bis $C_{18}$), von ethoxylierten Alkylphenolen (EO-Grad: 3 bis 50, Alkylrest: $C_4$- bis $C_9$), von Alkylsulfonsäuren (Alkylrest: $C_{12}$- bis $C_{18}$) und von Alkylarylsulfonsäuren (Alkylrest: $C_9$- bis $C_{18}$).

Weitere geeignete Emulgatoren sind Verbindungen der allgemeinen Formel II

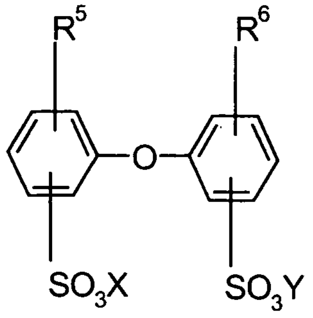

(II)

worin $R^5$ und $R^6$ Wasserstoff oder $C_4$- bis $C_{14}$-Alkyl bedeuten und nicht gleichzeitig Wasserstoff sind, und X und Y Alkalimetallionen und/oder Ammoniumionen sein können. Vorzugsweise bedeuten $R^5$, $R^6$ lineare oder verzweigte Alkylreste mit 6 bis 18 C-Atomen oder Wasserstoff und insbesondere mit 6, 12 und 16 C-Atomen, wobei $R^5$ und $R^6$ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, $R^5$ ein verzweigter Alkylrest mit 12 C-Atomen und $R^6$ Wasserstoff oder $R^5$ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z. B. Dowfax® 2 A1, Emulan® NP 50, Dextrol® OC 50, Emulgator 825, Emulgator 825 S, Emulan® OG, Texapon® NSO, Nekanil® 904 S, Lumiten® I-RA, Lumiten® E 3065, Disponil® FES 77, Lutensol® AT 18, Steinapol VSL, Emulphor NPS 25.

Für die vorliegende Erfindung sind ionische Emulgatoren oder Schutzkolloide bevorzugt. Besonders bevorzugt handelt es sich um ionische Emulgatoren, insbesondere Salze und Säuren, wie Carbonsäuren, Sulfonsäuren und Sulfate, Sulfonate oder Carboxylate. In einer besonders bevorzugten Ausführungsform werden Schutzkolloide, vorzugsweise in Mengen von 0 bis 30 Gew.-Teilen, besonders bevorzugt von 10 bis 20 Gew.-Teilen auf 100 Gew.-Teile der zu polymerisierenden Monomeren verwendet.

Die grenzflächenaktiven Substanzen insgesamt (also Emulgatoren und Schutzkolloide) werden vorzugsweise in Mengen von 0,1 bis 35 Gew.-Teile, vorzugsweise 0,2 bis 30 Gew.-Teile bezogen auf 100 Gew.-Teile der zu polymerisierenden Monomeren verwendet.

Schutzkolloide werden vorzugsweise bei der Emulsionspolymerisation vorgelegt, während Emulgatoren ggb. zusammen mit den Monomeren auch im Laufe der Polymerisation zugeführt werden können.

Wasserlöslichen Initiatoren für die Emulsionspolymerisation sind z.B. Ammonium- und Alkalimetallsalze der Peroxidischwefelsäure, z. B. Natriumperoxodisulfat, Wasserstoffperoxid oder organische Peroxide, z. B. tert-Butylhydroperoxid.

Geeignet sind auch sogenannte Reduktions-Oxidations (Red-Ox)-Initiator Systeme.

Die Red-Ox-Initiator-Systeme bestehen aus mindestens einem meist anorganischen Reduktionsmittel und

einem anorganischen oder organischen Oxidationsmittel.

Bei der Oxidationskomponente handelt es sich z. B. um die bereits vorstehend genannten Initiatoren für die Emulsionspolymerisation.

Bei der Reduktionskomponenten handelt es sich z. B. um Alkalimetallsalze der schwefligen Säure, wie z. B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z. B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z. B. die Reduktionskomponente, können auch Mischungen sein z. B. eine Mischung aus dem Natriumsalz der Hydroxymethansulfinsäure und Natriumdisulfit.

Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z. B. in Mengen von 0 bis 0,8 Gew.-Teile, bezogen auf 100 Gew.-Teile der zu polymerisierenden Monomeren, durch die Molmasse verringert wird. Geeignet sind z. B. Verbindungen mit einer Thiolgruppe wie tert.-Butylmercaptan, Thioglycolsäureethylacrylester, Mercaptoethynol, Mercaptopropyltrimethoxysilan oder tert.-Dodecylmercaptan.

Die Emulsionspolymerisation erfolgt in der Regel bei 30 bis 130, vorzugsweise 50 bis 90 °C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich oder auch stufenweise zuführt.

Das Polymer ist vorzugsweise durch mehrstufige Emulsionspolymerisation erhältlich; es wird entsprechend vorzugsweise durch mehrstufige Emulsionspolymerisation hergestellt.

Die Polymerisation erfolgt vorzugsweise in mindestens zwei zeitlich aufeinanderfolgenden Stufen, wobei sich die einzelnen Stufen in der nach Fox berechneten Glasübergangstemperatur (Tg) der in dieser Stufe polymerisierten Monomeren unterscheiden (kurz auch Tg der Stufe genannt).

Vorzugsweise ist die Tg der letzten Stufe mindestens 5 °C höher, insbesondere mindestens 10 °C höher als die Tg der vorhergehenden Stufe.

Die Tg der letzten Stufe ist insbesondere größer 0 °C, besonders bevorzugt größer 10 °C, ganz besonders bevorzugt größer 20 °C; sie kann insbesondere größer 50 °C sein und z. B. bis zu 125 °C betragen, insbesondere kann sie ca. 110 °C betragen, wenn z. B. in der letzten Stufe nur Methymethacrylat (MMA) polymerisiert wird.

Vorzugsweise enthält die letzte Stufe MMA, besonders bevorzugt besteht sie zu mindestens 20 Gew.-%, insbesondere zu mindestens 25 Gew.-%, oder auch mindestens 40 Gew.-% aus MMA.

Bei mehr als zwei Stufen nimmt die Tg vorzugsweise von der ersten bis zur letzten Stufe zu.

Die Polymerisation kann z. B. in zwei Stufen erfolgen. Beim zweistufigen Polymer werden vorzugsweise 50 bis 99 Gew.-%, vorzugsweise 55 bis 75 Gew.-% der Monomeren in einer ersten Stufe polymerisiert. Die nach Fox berechnete Glasübergangstemperatur der Monomere dieser ersten Stufe beträgt -50 bis +25 °C, vorzugsweise -50 bis 0 °C. In der zweiten Stufe werden dann 1 bis 40 Gew.-%, vorzugsweise 25 bis 45 Gew.-% der Monomeren polymerisiert, wobei die nach Fox berechnete Glasübergangstemperatur der Monomere dieser Stufe 20 bis 125 °C, vorzugsweise 30 bis 110 °C beträgt.

In einer besonders bevorzugten Ausführungsform erfolgt die Polymerisation in mindestens drei Stufen.

Bei mehr als zwei Stufen erhält man mit noch geringerem Anteil an harten Monomeren (Monomere mit hoher Tg) nicht klebrige Beschichtungen. Der Gew. Anteil der Stufen mit einer Tg größer 20 °C beträgt bei mehr als zweistufigen Polymeren vorzugsweise insgesamt 5 bis 40 Gew.-%, besonders bevorzugt 10 bis 30 Gew.-%.

Bei einer dreistufigen Polymerisation sind die Monomermengen und Tg vorzugsweise wie folgt:

1. Stufe: 50 bis 90 Gew.-%, Tg (°C): -50 bis +20

(fortgesetzt)

| | | | | |
|---|---|---|---|---|
| 2. | Stufe: | 2 bis 15 Gew.-%, | Tg (°C): | -20 bis +30 |
| 3. | Stufe: | 2 bis 15 Gew.-% | Tg (°C): | 0 bis +125 |

Insbesondere ist die Tg der 3. Stufe mindestens 5 ° höher ist als die der 2. Stufe und die der 2. Stufe mindestens 5 ° höher ist als die der 1. Stufe.

Bei einer vier-stufigen Polymerisation sind die Monomermengen und Tg vorzugsweise wie folgt:

| | | | | |
|---|---|---|---|---|
| 1. | Stufe: | 50 bis 80 Gew.-%, | Tg (°C) | -50 bis +20 |
| 2. | Stufe: | 2 bis 15 Gew.-% | Tg (°C) | -20 bis +30 |
| 3. | Stufe | 2 bis 15 Gew.-% | Tg (°C) | 0 bis 60 |
| 4. | Stufe | 2 bis 15 Gew.-% | Tg (°C) | 20 bis 125 |

Insbesondere ist die Tg der 4. Stufe mindestens 5 ° höher ist als die der 3. Stufe und die der 3. Stufe mindestens 5 ° höher ist als die der 2. Stufe und die der 2. Stufe mindestens 5 ° höher ist als die der 1. Stufe.

Bei der mehrstufigen Polymerisation erfolgt die Polymerisation der Monomeren der einzelnen Stufen während oder unmittelbar nach der Zugabe der Monomeren zum Polymerisationsgemisch. Das heißt, dass während oder unmittelbar nach der Zugabe der Monomeren die Bedingungen so sind, dass die zugegebenen Monomeren polymersieren. Insbesondere sollte dazu ein Initiator zugegen sein und die Temperatur ausreichend hoch sein. Besonders bevorzugt wird zeitgleich mit der Monomerzugabe Initiator zugesetzt. Falls die Monomeren einer Stufe über einen längeren Zeitraum kontinuierlich zugeführt werden, wird vorzugsweise während mindestens dem gleichen Zeitraum Initiator zugeführt. Da die zugeführten Monomeren während oder unmittelbar nach Zugabe polymerisieren, kommt es nicht zu der z. B. in EP-A 1 420 055 beschriebenen Quellungspolymerisation.

Zur Entfernung der Restmonomeren wird üblicherweise auch nach dem Ende der eigentlichen Emulsionspolymerisation Initiator zugesetzt.

Durch die vorstehende mehrstufige Emulsionspolymerisation ist insbesondere ein bei 20 °C nicht klebriges Polymer erhältlich, welches eine nach Fox berechnete Glasübergangstemperatur aller Monomeren, aus denen das Polymer aufgebaut ist, von -50 bis + 10 °C hat, mindestens zweistufig aufgebaut ist, **dadurch gekennzeichnet, dass** die Polymerisation in mindestens zwei zeitlich aufeinanderfolgenden Stufen erfolgt, wobei sich die einzelnen Stufen in der nach Fox berechneten Glasübergangstemperatur (Tg) der Monomeren unterscheiden und die Tg der letzten Stufe mindestens 0 °C beträgt.

Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81 083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach der für eine niedrige Viskosität angestrebten Teilchengrößenverteilung.

Das so hergestellte Polymer wird vorzugsweise in Form seiner wässrigen Dispersion verwendet.

Die mittlere Teilchengröße der in der wässrigen Dispersion dispergierten Polymerteilchen ist vorzugsweise kleiner 400 nm, insbesondere kleiner 300 nm. Besonders bevorzugt liegt die mittlere Teilchengröße zwischen 140 und 250 nm.

Unter mittlerer Teilchengröße wird hier der $d_{50}$-Wert der Teilchengrößenverteilung verstanden, d. h. 50 Gew.-% der Gesamtmasse aller Teilchen haben einen kleineren Teilchendurchmesser als der $d_{50}$-Wert. Die Teilchengrößenverteilung kann in bekannter Weise mit der analytischen Ultrazentrifuge (W. Mäschtle, Makromolekulare Chemie 185 (1984), Seite 1025 - 1039) bestimmt werden.

Der pH-Wert der Polymerdispersion wird vorzugsweise auf pH größer 2 insbesondere auf einen pH-Wert zwischen 4 und 8 eingestellt.

Die Zusammensetzung kann für die erfindungsgemäße Verwendung allein aus dem Polymeren bestehen. Sie kann aber auch noch weitere Zusatzstoffe enthalten, z.B. Füllstoffe, Farbstoffe, Verlaufsmittel, oder Verdicker.

Die Zusammensetzung, bzw. das Polymer ist auto-adhäsiv. Obwohl die Oberfläche des Polymeren nicht oder nur wenig klebrig ist, kann das Polymer mit sich selbst verklebt werden. Bereits bei leichtem Kontakt zweier mit dem Polymer beschichteter Substrate, haften beide Substrate mit der beschichteten Seite aneinander.

Zwei mit der Zusammensetzung beschichte Polyesterträger (Polyethylentherephthalat, PET) haften insbesondere bereits bei Andrücken bei 20 °C mit einer Schälfestigkeit größer 1 N/2,5 cm, vorzugsweise größer 2 bzw. größer 3 N/2,5 cm aneinander. Die Schälfestigkeit wird nach folgender Meßmethode bestimmt:

Die Dispersionen bzw. Lösungen des Polymeren werden auf 25 mm breite Stücke PET-Folie mit 30 g/m2 (fest) aufgerakelt und 3 Minuten bei 90 °C getrocknet. Ein Prüfstreifen werden mit der beschichteten Seite aufeinander gelegt und versiegelt mit einem 4 bar Druck (bei 20 °C, d. h. Kaltversiegelung).

Er wird dann mit einem Ende in die oberen Backen einer Zug-Dehnungs-Prüfapparatur eingespannt. Der Klebestreifen wird mit 300 mm/min unter einem 180 ° Winkel von der Prüffläche (V2A-Stahl) abgezogen d. h. der Klebestreifen wurde umgebogen und parallel zum Prüfblech abgezogen und der dazu benötigte Kraftaufwand gemessen. Das Maß für die Schälfestigkeit ist die Kraft in N/2,5 cm, die sich als Durchschnittswert aus fünf Messungen ergab (entspricht AFERA Standard Methode). Die Schälfestigkeit wird sofort nach der Verklebung bestimmt.

Die Haftung wird durch stärkeres Andrücken oder durch Temperaturerhöhung verstä rkt.

Die erfindungsgemäße Zusammensetzung, bzw. das Polymer kann daher als Klebstoff für die Heiß- oder Kaltversiegelung, z. B. von Verpackungen eingesetzt werden

Insbesondere eignet sich die erfindungsgemäße Zusammensetzung als Klebstoff für die Kaltversiegelung. Unter Kaltversiegelung wird dabei ein Verfahren verstanden, bei dem die Temperatur in der Klebstoffschicht (und vorzugsweise auch die Temperatur der zu verklebenden Substrate) kleiner 40°C, insbesondere kleiner 30 °C bzw. kleiner 25 °C ist. Im allgemeinen wird die Kaltversiegelung bei gegebener Raumtemperatur, im allgemeinen also bei Temperaturen von 10 bis 30 °C, insbesondere 15 bis 25 °C durchgeführt. Vorzugsweise werden die Substrate unter Ausübung von Druck in Kontakt gebracht. Geeignet sind Drucke schon von wenigen Millibar bis zu mehreren Bar über Normaldruck (1 bar), genannt seine Drucke von 0,01 bis 5 bar, insbesondere von 0,1 bis 3 bar über Normaldruck. Die Siegelzeit (Zeit während der die Temperatur und ggb der Druck aufrecht erhalten wird) beträgt z. b. 0,1 bis 20 Sekunden, insbesondere 0,1 bis 3 Sekunden, üblich ist insbesondere 0,5 Sekunden.

Die erfindungsgemäße Zusammensetzung eignet sich zum Verbinden von zwei beliebigen Substraten, wobei,

- die beiden Substrate an den Stellen, die verklebt werden sollen, mit der erfindungsgemäßen Zusammensetzung beschichtet sind und
- die beiden Substrate gegebenenfalls unter Ausübung von Druck in Kontakt gebracht werden und die Temperatur in der beschichteten Zusammensetzung kleiner 40 ° C ist (Kaltversiegelung, siehe oben).

Als zu verklebende Substrate kommen beliebige in Betracht, z. B. Substrate aus Holz, Metall, Papier oder Kunststoff, die in beliebiger Kombination miteinander verklebt werden können.

Die Substrate werden dazu mit der erfindungsgemäßen Zusammensetzung beschichtet. Die Beschichtung kann in üblicher Weise erfolgen, übliche Schichtdicken (nach Trocknung) sind z. B. 1 bis 30 $g/m^2$. vorzugsweise 3 bis 30 $g/m^2$.

Insbesondere eignet sich die erfindungsgemäße Zusammensetzung zur Herstellung von Verpackungen. In Betracht kommen dabei Verpackungen aus beliebigen Materialien, z. B. aus Papier oder vorzugsweise aus Kunststoff. Genannt seien z. B..Verpackungen aus Polymerfolien , gegebenenfalls auch metallisierten Polymerfolien, z. B. aus Polyethylen, Polypropylen, PVC, Polyester, Polyacetat.

Zur Herstellung von Verpackungen ist insbesondere ein beidseitig beschichteter Träger geeignet, wobei der Träger auf der einen Seite (im nachfolgenden als Vorderseite bezeichnet) eine äußere Schicht der erfindungsgemäßen Zusammensetzung aufweist und auf der anderen Seite (im nachfolgenden als Rückseite bezeichnet) eine äußere Release-beschichtung aufweist.

Der Träger kann z. B. aus einer der oben genannten Polymerfolien, bzw. metallisierten Polymerfolien bestehen, genannt seien insbesondere Folien aus orientiertem Polypropylen, Polyethylen, vorzugsweise high density Polyethylen oder Polyethylentherephthalat. Die Polymerfolien können auch Corona vorbehandelt sein.

Die erfindungsgemäße Zusammensetzung kann direkt auf die Vorderseite des Trägers beschichtet sein, zwischen dem Träger und der erfindungsgemäßen Zusammensetzung können sich jedoch auch noch andere Schichten befinden, z. B. Primerschichten oder Druckfarben - schichten (farbige oder schwarz-weiße Abbildungen). Wesentlich ist, dass es sich die Schicht der erfindungsgemäßen Zusammensetzung außen befindet.

Die Release - Beschichtung kann aus einem beliebigen Material sein, es kann sich um eine Polymerfolie, z.B. eine Folie ais orientiertem Polypropylen, die aufkaschiert oder coextrudiert wird, oder um einen flüssigen Lack, z. B. ein Polyamid-lack, der aufgetragen und verfilmt wird, handeln; wesentlich ist, dass die auf der Vorderseite des Trägers aufgebrachte Klebstoffschicht (im vorliegenden Fall die erfindungsgemäße Zusammensetzung) nicht auf der Release-Beschichtung haftet (Blockfestigkeit). Der Träger wird im allgemeinen aufgerollt und später von der Rolle verarbeitet. Beim Aufrollen kommen die Vorderseite und die Rückseite des Trägers in direkten Kontakt. Ein Haften der Vorderseite auf der Rückseite würde den Träger unbrauchbar machen.

Zwischen der Release-beschichtung und dem Träger können sich weitere Schichten befinden; in Betracht

kommen wiederum Schichten eines Primers, der die Haftung verbessert und Druckfarbenschichten. Die äußere Releasebeschichtung hat auch die Aufgabe, die unteren Schichten, insbesondere die Druckfarbenschicht gegen äußere Einwirkungen zu schützen.

Bevorzugte Träger sind wie folgt aufgebaut, wobei die Reihenfolge der Schichten der räumlichen Anordnung entspricht:

Klebstoffschicht (erfindungsgemäße Zusammensetzung)
Träger
Gegebenenfalls Primerschicht
Gegebenenfalls Druckfarbenschicht
Release-Beschichtung

Der beidseitig beschichtete Träger wird insbesondere zur Herstellung von Verpackungen verwendet, vorzugsweise wird er dazu mit sich selbst durch Kaltversiegelung, verklebt, wobei jeweils die Vorderseiten (mit der äußeren erfindungsgemäßen Zusammensetzung in Kontakt gebracht werden. Wesentlich ist dabei, dass beide zu verklebenden Träger an den zu verklebenden Stellen (Siegelnaht) mit der erfindungsgemäßen Zusammensetzung beschichtet sind. Die Verpackung wird durch Heiß- oder vorzugsweise Kaltversiegelung der Klebstoffschicht miteinander verschlossen, sobald das zu verpackende Gut eingefüllt ist.

Die Verpackungen eignen sich insbesondere für Lebensmittel.

Beispiele

Beispiel 1

Herstellung eines zweistufigen Polymeren

Feststoffgehalt: 57.00%

Monomermenge: 800,00g

Vorlage

| Menge | Einsatzstoff |
|---|---|
| Gesamt: | 135,76 g |
| 106,50 g | VE-Wasser |
| 12,12 g | Saat T 6772 (33 %-ig in Wasser) |
| 17,14 g | Natriumperoxodisulfat (7 %-ig) |

Zulauf 1

| | |
|---|---|
| Gesamt: | 976,52 g |
| 319,00 g | VE-Wasser |
| 17,50 g | Dowfax 2A1 (Emulgator) |
| 640,00 g | n-Butylacrylat |

Zulauf 2

| | |
|---|---|
| Gesamt: | 244,10 g |
| 71,60 g | VE-Wasser |
| 12,50 g | Dowfax 2A1 |

(fortgesetzt)

| | |
|---|---|
| 80,00 g | Methylmethacrylat |
| 80,00 g | Methylacrylat |

Zulauf 3

| | |
|---|---|
| Gesamt: | 10,00 g |
| 10,00 g | Acetonbisulfit |

Zulauf 4

| | |
|---|---|
| Gesamt: | 24,00 g |
| 24,00 g | tert.-Butylhydroperoxid (10 %-ig) |

Zulauf 5

| | |
|---|---|
| Gesamt: | 12,00 g |
| 12,00 g | Natriumhydrogencarbonat |

Zulauf 6

| | |
|---|---|
| Gesamt: | 12,00 g |
| 12,00 g | tert.-Butylhydroperoxid |

Zulauf 7

| | |
|---|---|
| Gesamt: | 8,89 g |
| 8,89 g | Rongalit C |

Zulauf 8

| | |
|---|---|
| Gesamt: | 32,00 g |
| 32,00 g | Natriumhydrogencarbonat |

Die Vorlage wurde auf 80 °C aufgeheizt. Dann wurde Zulauf 1, Zulauf 3, Zulauf 4 und Zulauf 5 gestartet. Zulauf 1 wurde in 2 h zudosiert und 45 min nachpolymerisiert. Danach wurde Zulauf 2 in 45 min zudosiert und 30 min nachpolymerisiert. Zulauf 3, Zulauf 4 und Zulauf 5 wurden in 4 h zudosiert. Danach wurden Zulauf 6 und Zulauf 7 in 1 h zugefahren. Nach dem Abkühlen auf Raumtemperatur wurde mit Zulauf 8 auf pH 6 bis 8 eingestellt.

Beispiel 2

Herstellung eines dreistufigen Polymeren

Feststoffgehalt: 54,00%

Vorlage

| Menge | Einsatzstoff |
|---|---|
| Gesamt: | 207,30 g |
| 39,04 g | VE-Wasser |
| 0,76 g | Saat T 6772 |
| 150,00 g | C*Plus 10998 |
| 12,50g | Wasserperoxid |
| 5,00 g | Dissolvine E-Fe 13 |

Teilmengenzulage

| | |
|---|---|
| In Vorlage | 9,38 g von Zulauf 4 |
| Restzulauf | 84,38 g von Zulauf 4 |

Zulauf 1

| | |
|---|---|
| Gesamt: | 628,91 g |
| 189,80 g | VE-Wasser |
| 5,78 g | Disponil FES 77 (30 %-ig) |
| 370,00 g | n-Butylacrylat |
| 63,33 g | Methylmethacrylat |

Zulauf 2

| | |
|---|---|
| Gesamt: | 48,38 g |
| 14,60 g | VE-Wasser |
| 0,44 g | Disponil FES 77 (30 %-ig) |
| 23,33 g | n-Butylacrylat |
| 10,00 g | Methylmethacrylat |

Zulauf 3

| | |
|---|---|
| Gesamt: | 48,38 g |
| 14,60 g | VE-Wasser |
| 0,44 g | Disponil FES 77 (30 %-ig) |
| 16,67 g | n-Butylacrylat |
| 16,67 g | Methylmethacrylat |

Zulauf 4

| | |
|---|---|
| Gesamt: | 93,75 g |
| 93,75 g | Ascorbinsäure (2 %-ig) |

Zulauf 5

| | |
|---|---|
| Gesamt: | 3,33 g |
| 3,33 g | Wasserstoffperoxid (30 %-ig) |

Zulauf 6

| | |
|---|---|
| Gesamt: | 30,00 g |
| 30,00 g | Ascorbinsäure (5 %-ig) |

Zulauf 7

| | |
|---|---|
| Gesamt: | 33,33 g |
| 33,33 g | Steinapol NLS (15 %-ig) |

Die Vorlage wurde auf 70 °C geheizt; bei 70 °C wurde die Teilmenge Zulauf 4 in 2 min zugeben und 3 min polymerisiert. Danach wurde Zulauf 1 und Restmenge Zulauf 4 gestartet. Zulauf 1 wurde in 2 h 10 min zufahren, danach Zulauf 2 in 10 min und Zulauf 3 in 10 min zudosiert. Die Restmenge Zulauf 4 wurde während dieser Zeit in 3 h zudosiert. Zulauf 5 wurde in 1 min zugeben. Zulauf 6 wurde in 1 h zugefahren. Zulauf 7 wurde zugegeben und dann abgekühlt.

Beispiel 3

Herstellung eines vierstufigen Polymeren

Feststoffgehalt: 51,00%
Monomermenge: 500,00g

Vorlage

| Menge | Einsatzstoff |
|---|---|
| Gesamt: | 307,48 g |
| 84,30 g | VE-Wasser |
| 1,52 g | Saat T 6772 (33 %-ig) |
| 200,00 g | C*Plus 10998 (50 %-ig) |
| 16,67 g | Wasserperoxid (30 %-ig) |
| 5,00 g | Dissolvine E-Fe 13 (1 %-ig) |

Teilmengenzulage

| | | |
|---|---|---|
| In Vorlage | 12,50 g | Von Zulauf 5 |
| Restzulauf | 112,50 g | Von Zulauf 5 |

Zulauf 1

| | |
|---|---|
| Gesamt: | 585,46 g |
| 180,92 g | VE-Wasser |
| 1,33 g | Disponil FES 77 (30 %-ig) |
| 3,20 g | Ammoniak (25 %-ig) |
| 360,00 g | n-Butylacrylat |
| 40,00 g | Methylmethacrylat |

Zulauf 2

| | |
|---|---|
| Gesamt: | 48,79 g |
| 15,08 g | VE-Wasser (100 %) |
| 0,11 g | Disponil FES 77 (30 %) |
| 0,27 g | Ammoniak (25 %) |
| 23,33 g | n-Butylacrylat (100 %) |
| 10,00g | Methylmethacrylat (100 %) |

Zulauf 3

| | |
|---|---|
| Gesamt: | 48,79 g |
| 15,08 g | VE-Wasser (100 %) |
| 0,11 g | Disponil FES 77 (30 %) |
| 0,27 g | Ammoniak (25 %) |
| 16,67 g | n-Butylacrylat (100 %) |
| 16,67 g | Methylmethacrylat (100 %) |

Zulauf 4

| | |
|---|---|
| Gesamt: | 48,79 g |
| 15,08 g | VE-Wasser (100 %) |
| 0,11 g | Disponil FES 77 (30 %) |
| 0,27 g | Ammoniak (25 %) |
| 10,00 g | n-Butylacrylat (100 %) |
| 23,33 g | Methylmethacrylat (100 %) |

Zulauf 5

| | |
|---|---|
| Gesamt: | 125,00 g |
| 125,00 g | Ascorbinsäure (1 %) |

Zulauf 6

| | |
|---|---|
| Gesamt: | 3,33 g |
| 3,33 g | Wasserperoxid (30 %-ig) |

Zulauf 7

| | |
|---|---|
| Gesamt: | 30,00 g |
| 30,00 g | Ascorbinsäure (5 %-ig) |

Die Vorlage wird auf 80 °C aufgeheizt. Bei 80 °C wird die Teilmenge Zulauf 5 in 2 min zugeben und 3 min polymerisiert. Danach wird Zulauf 1 in 2 h und die Restmenge. Zulauf 2 wird in 10 min zudosiert. Zulauf 3 wird in 10 min zudosiert. Zulauf 4 wird in 10 min zudosieren. Zulauf 5 wird während dieser Zeit in 3 h zudosiert. 30 min wird nachpolymerisiert. Zulauf 6 wird in 1 min zugeben. Zulauf 7 wurde in 1 h zugefahren und dann auf Raumtemperatur abgekühlt.

Die Zusammensetzung der Polymere war wie folgt (Angaben in Gew. %, bezogen auf das Polymer):

| | | n-Butylacrylat (BA) | Methylmethacrylat (MMA) | Methylacrylat (MA) | Polymer Tg (°C) |
|---|---|---|---|---|---|
| Polymer 1 | gesamt | 80,0 | 10,0 | 10,0 | |
| | 1. Stufe | 80,0 | - | - | -43,0 |
| | 2. Stufe | - | 10,0 | 10,0 | +58,4 |
| Polymer 2 | gesamt | 82,0 | 18,0 | - | |
| | 1. Stufe | 74,0 | 12,7 | - | -29,0 |
| | 2. Stufe | 4,7 | 2,0 | - | -12,4 |
| | 3. Stufe | 3,3 | 3,3 | - | +13,0 |
| Polymer 3 | gesamt | 58,0 | 42,0 | - | |
| | 1. Stufe | 50,0 | 30,0 | - | -3,4 |
| | 2. Stufe | 3,7 | 3,0 | - | +6,2 |
| | 3. Stufe | 2,3 | 4,3 | - | +35,5 |
| | 4. Stufe | 2,0 | 4,7 | - | +43,8 |

Die anwendungstechnischen Eigenschaften wurden nach den in der Beschreibung angegebenen Meßmethoden bestimmt.

Schälfestigkeit gegen Stahl (Blockfestigkeitsprüfung, Nachweis der Nicht-Klebrigkeit):

| Probe | Stufe | Substrat | Schälfestigkeit (N/2,5 cm) |
|---|---|---|---|
| Polymer 1 | 2-stufige | Stahl | 0,15 |
| Polymer 2 | 3-stufige | Stahl | 0,05 |

(fortgesetzt)

| Probe | Stufe | Substrat | Schälfestigkeit (N/2,5 cm) |
|---|---|---|---|
| Polymer 3 | 4-stufige | Stahl | 0,00 |

Schlingenwerte gegen Stahl (Blockfestigkeitsprüfung, Nachweis der Nicht-Klebrigkeit):

| Probe | Stufe | Substrat | Schlingenwerte (N/2,5 cm) |
|---|---|---|---|
| Polymer 1 | 2-stufige | Stahl | 0,15 |
| Polymer 2 | 3-stufige | Stahl | 0,00 |
| Polymer 3 | 4-stufige | Stahl | 0,00 |

Schälfestigkeit (Autoadhäsionsprüfung, Kaltversiegelung):

| Probe | Stufe | Substrat | Schälfestigkeit (N/2,5 cm) |
|---|---|---|---|
| Polymer 1 | 2-stufige | Sich selbst | 2,93 |
| Polymer 2 | 3-stufige | Sich selbst | 4,65 |
| Polymer 3 | 4-stufige | Sich selbst | 1,40 |

Kaltversiegelung

Als Träger wurde eine Folie aus orientiertem Polypropylen (oPP, ggb Corona vorbehandelt, siehe Tabelle) verwendet. Die Folie wurde auf der Rückseite mit einem Release-lack (0,07 mm Drahtrakel, 1,0 g/m2 Polyamid - lösung) beschichtet und 10 Sekunden mit dem Föhn getrocknet.

Auf der Vorderseite wurde eine Polymerdispersion gemäß Beispiel 2 (erfindungsgemäß) bzw. im Vergleichsversuch ein Naturkautschuk (welche bisher für Kaltversiegelung verwendet werden) beschichtet (0,1 mm Drahtrakel, Auftragsgewicht siehe Tabelle) und 1 Minute bei 70 °C getrocknet.

Prüfungen:

Siegelnahtfestigkeit

Aus den beidseitig beschichteten oPP Folien wurden 15 mm breite Streifen geschnitten, zwei Streifen wurden mit der Klebstoffseite aufeinander gelegt und am Siegelgerät 0,5 Sekunden mit 2,1 bar gesiegelt. Sofort nach der Siegelung wurden mit einer Abzugsgeschwindigkeit von 50 mm/min die Schälfestigkeiten in N/15 mm bestimmt.

Blocktest

Die beidseitig beschichteten oPP Folien wurden mit der Release-lack-Seite auf die Klebstoffseite gelegt und 24 Stunden mit 10 Tonnen Gewicht belastet; danach wurde die Schälfestigkeit mit einer Abzugsgeschwindigkeit von 800 mm/min in N/25 mm bestimmt. Die Klebstoffseite soll möglichst nicht auf dem Release-lack haften, die erhaltenen Schälfestigkeit sollen daher möglichst klein sein.

Ergebnisse.

| | Vergleichsversuch | | erfindungsgemäß | | |
|---|---|---|---|---|---|
| pH Wert | 9,84 | 9,84 | 2.01 | 6,07 | 10,04 |
| Viskosität (mPas) | 48 | 48 | 153 | 125 | 35 |
| OPP Corona vor- behandelt | ja | nein | ja | ja | ja |

(fortgesetzt)

| | Vergleichsversuch | | erfindungsgemäß | | |
|---|---|---|---|---|---|
| Auftragsgewicht des Klebstoffs in g/m2 | 3,08 | 2,82 | 2,75 | 2,55 | 2,61 |
| Siegelnahtfestigkeit sofort | 1,31 | 0,27 | 1,07 | 1,31 | 1,22 |
| Siegelnahtfestigkeit nach 1 Tag | 1,42 | 0,56 | 1,11 | 1,40 | 1,52 |
| Blocktest | 0,05 | 0,03 | 0,06 | 0,09 | 0,10 |

**Patentansprüche**

1. Verwendung einer bei 20 °C nicht oder wenig klebrigen Zusammensetzung als Klebstoff, der mit sich selbst verklebt werden kann (im nachfolgenden kurz autoadhäsiver Klebstoff genannt), für die Heiß- oder Kaltversiegelung, wobei "wenig klebrig" bedeutet, dass ein mit der Zusammensetzung beschichteter Polyethylentherephthalatträger auf Stahl bei 20 °C eine Haftung von kleiner 0,5 N/2,5 cm hat.

2. Verwendung gemäß Anspruch 1, **dadurch gekennzeichnet, dass** ein mit der Zusammensetzung beschichteter Polyethylenträger auf Stahl bei 20°C eine Haftung kleiner 0,5 N/2,5 cm hat.

3. Verwendung gemäß einem der Ansprüche 1 oder 2, **dadurch gekennzeichnet, dass** die Zusammensetzung eine wässrige Polymerdispersion als Bindemittel enthält.

4. Verwendung gemäß einem der Ansprüche 1 oder 2, **dadurch gekennzeichnet, dass** das dispergierte Polymer zu mindestens 60 Gew. % aus sogenannten Hauptmonomeren, ausgewählt aus C1 bis C20 Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren, aufgebaut ist.

5. Verwendung gemäß einem der Ansprüche 1 bis 3, **dadurch gekennzeichnet, dass** das Polymer zu mehr als 60 Gew. % aus C1 bis C20 Alkyl(meth)acrylaten besteht.

6. Verwendung gemäß einem der Ansprüche 1 bis 4, **dadurch gekennzeichnet, dass** die Glasübergangstemperatur aller Monomeren, aus denen das Polymer aufgebaut ist, nach Fox berechnet -50 bis +10 °C beträgt.

7. Verwendung gemäß einem der Ansprüche 1 bis 5, **dadurch gekennzeichnet, dass** das dispergierte Polymer durch mehrstufige Emulsionspolymerisation erhältlich ist.

8. Verwendung gemäß einem der Ansprüche 1 bis 6, **dadurch gekennzeichnet, dass** die Polymerisation in mindestens zwei zeitlich aufeinanderfolgenden Stufen erfolgt, wobei sich die einzelnen Stufen in der nach Fox berechneten Glasübergangstemperatur (Tg) der in dieser Stufe polymerisierten Monomeren unterscheiden (kurz auch Tg der Stufe genannt) und die Tg der letzten Stufe größer als 0 °C ist.

9. Verwendung gemäß einem der Ansprüche 1 bis 7, **dadurch gekennzeichnet, dass** die Tg der letzten Stufe mindestens 5°C höher ist als die Tg der vorhergehenden Stufe.

10. Verwendung gemäß einem der Ansprüche 1 bis 8, **dadurch gekennzeichnet, dass** die Tg der Stufen von der ersten bis zur letzten Stufe zunimmt.

11. Verwendung gemäß einem der Ansprüche 1 bis 9, **dadurch gekennzeichnet, dass** die Polymerisation in zwei Stufen erfolgt, wobei 60 bis 99 Gew. % der Monomeren in einer ersten Stufe polymerisiert werden und die nach Fox berechnete Glasübergangstemperatur der Monomere dieser Stufe von -50 bis +5°C beträgt und 1 bis 40 Gew. % der Monomeren in einer zweiten Stufe polymerisiert werden, wobei die nach Fox berechnete Glasübergangstemperatur der Monomere dieser Stufe 20 bis 125°C beträgt und die Glasübergangstemperatur der Monomeren der 2. Stufe mindestens 5°C höher ist als die der ersten Stufe.

**12.** Verwendung gemäß einem der Ansprüche 1 bis 10, **dadurch gekennzeichnet, dass** die Polymerisation in mindestens drei Stufen erfolgt, wobei der Gew. Anteil der Stufen mit einer Tg größer 0 °C insgesamt 5 bis 40 Gew.% beträgt.

**13.** Verwendung gemäß einem der Ansprüche 1 bis 11, **dadurch gekennzeichnet, dass** die Polymerisation in drei Stufen erfolgt, wobei die Monomermengen und Tg wie folgt sind:

| | | | | |
|---|---|---|---|---|
| 1. | Stufe: | 50 bis 90 Gew.-%, | Tg (°C): | -50 bis +20 |
| 2. | Stufe: | 2 bis 15 Gew.-%, | Tg (°C): | -20 bis + 30 |
| 3. | Stufe: | 2 bis 15 Gew.-% | Tg (°C): | 0 bis +125 |

und die Tg der 3. Stufe mindestens 5°C höher ist als die der 2. Stufe und die der 2. Stufe mindestens 5°C höher ist als die der 1. Stufe.

**14.** Verwendung gemäß einem der Ansprüche 1 bis 11, **dadurch gekennzeichnet, dass** die Polymerisation in vier Stufen erfolgt, wobei die Monomermengen und Tg wie folgt sind:

| | | | | |
|---|---|---|---|---|
| 1. | Stufe: | 50 bis 80 Gew.-%, | Tg (°C) | -50 bis +20 |
| 2. | Stufe: | 2 bis 15 Gew.-% | Tg (°C) | -20 bis +30 |
| 3. | Stufe | 2 bis 15 Gew.-% | Tg (°C) | 0 bis 60 |
| 4. | Stufe | 2 bis 15 Gew.-% | Tg (°C) | 20 bis 125 |

und die Tg der 4. Stufe mindestens 5°C höher ist als die der 3. Stufe und die der 3. Stufe mindestens 5 °C höher ist als die der 2. Stufe und die der 2. Stufe mindestens 5°C höher ist als die der 1. Stufe.

**15.** Verwendung gemäß einem der Ansprüche 1 bis 13, **dadurch gekennzeichnet, dass** die Polymerisation der Monomeren der einzelnen Stufen während oder unmittelbar nach der Zugabe der Monomeren zum Polymerisationsgemisch erfolgt.

**16.** Verwendung der Zusammensetzung als Klebstoff für die Heiß- oder Kaltversiegelung von Verpackungen.

**17.** Verfahren zum Verbinden von zwei Substraten, **dadurch gekennzeichnet, dass**

- die beiden Substrate an den Stellen, die verklebt werden sollen, mit einer Zusammensetzung gemäß einem der Ansprüche 1 bis 15 beschichtet sind und
- die beiden Substrate gegebenenfalls unter Ausübung von Druck in Kontakt gebracht werden, wobei
- die Temperatur in der beschichteten Zusammensetzung kleiner 40 ° C ist (Kaltversiegelung).

**18.** Beidseitig beschichteter Träger, **dadurch gekennzeichnet, dass** der Träger auf der einen Seite (im nachfolgenden als Vorderseite bezeichnet) eine äußere Schicht der Zusammensetzung gemäß einem der Ansprüche 1 bis 15 aufweist und auf der anderen Seite (im nachfolgenden als Rückseite bezeichnet) eine äußere Schicht eines Releasebeschichtung aufweist.

**19.** Verwendung des Trägers gemäß Anspruch 18 zur Herstellung von Verpackungen.

## Claims

**1.** The use of a composition of low or no tack at 20°C as an adhesive that can be adhered to itself (referred to below for short as an autoadhesive), for hot or cold sealing, "low tack" meaning that a polyethylene terephthalate substrate coated with the composition has an adhesion to steel at 20°C of less than 0.5 N/2.5 cm.

**2.** The use according to claim 1, wherein a polyethylene substrate coated with the composition has an adhesion to steel at 20°C of less than 0.5 N/2.5 cm.

**3.** The use according to either of claims 1 and 2, wherein the composition comprises an aqueous polymer dispersion as binder.

4. The use according to either of claims 1 and 2, wherein the dispersed polymer is composed of at least 60% by weight of principal monomers selected from C1 to C20 alkyl (meth)acrylates, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, or mixtures of these monomers.

5. The use according to any one of claims 1 to 3, wherein the polymer is composed of more than 60% by weight of C1 to C20 alkyl (meth)acrylates.

6. The use according to any one of claims 1 to 4, wherein the glass transition temperature of all monomers of which the polymer is composed is -50 to +10°C as calculated by the method of Fox.

7. The use according to any one of claims 1 to 5, wherein the dispersed polymer is obtainable by multistage emulsion polymerization.

8. The use according to any one of claims 1 to 6, wherein the polymerization takes place in at least two temporally successive stages, the individual stages differing in the glass transition temperature (Tg) of the monomers polymerized in that stage, as calculated by the method of Fox (and also referred to for short as stage Tg), and the Tg of the last stage being greater than 0°C.

9. The use as claimed in any one of claims 1 to 7, wherein the Tg of the last stage is at least 5°C higher than the Tg of the preceding stage.

10. The use according to any one of claims 1 to 8, wherein the Tg of the stages increases from the first to the last stage.

11. The use according to any one of claims 1 to 9, wherein the polymerization takes place in two stages, 60% to 99% by weight of the monomers being polymerized in a first stage and the glass transition temperature of the monomers of this stage, as calculated by the method of Fox, being from -50 to +5°C, and 1% to 40% by weight of the monomers being polymerized in a second stage, the glass transition temperature of the monomers of this stage, calculated by the method of Fox, being 20 to 125°C, and the glass transition temperature of the monomers of the 2nd stage being at least 5° higher than that of the first stage.

12. The use according to any one of claims 1 to 10, wherein the polymerization takes place in at least three stages, the weight fraction of the stages with a Tg greater than 0°C amounting in total to 5% to 40% by weight.

13. The use according to any one of claims 1 to 11, wherein the polymerization takes place in three stages, the monomer amounts and Tgs being as follows:

| | |
|---|---|
| 1st stage: | 50% to 90% by weight, Tg |
| (°C): -50 to +20 | |
| 2nd stage: | 2% to 15% by weight Tg |
| (°C): -20 to + 30 | |
| 3rd stage: | 2% to 15% by weight Tg |
| (°C) : 0 to +125 | |

and the Tg of the 3rd stage is at least 5° higher than that of the 2nd stage, and that of the 2nd stage is at least 5° higher than that of the 1st stage.

14. The use according to any once of claims 1 to 11, wherein the polymerization takes place in four stages, the monomer amounts and Tgs being as follows:

| | |
|---|---|
| 1st stage: | 50% to 80% by weight, Tg |
| (°C) -50 to +20 | |
| 2nd stage: | 2% to 15% by weight Tg (°C) |
| -20 to +30 | |
| 3rd stage | 2% to 15% by weight Tg (°C) |

(continued)

| | | |
|---|---|---|
| | 0 to 60 | |
| 4th stage | | 2% to 15% by weight Tg (°C) |
| | 20 to 125 | |

and the Tg of the 4th stage being at least 5° higher than that of the 3rd stage, and that of the 3rd stage being at least 5 ° higher than that of the 2nd stage, and that of the 2nd stage being at least 5° higher than that of the 1st stage.

**15.** The use according to any one of claims 1 to 13, wherein the polymerization of the monomers of the individual stages takes place during or immediately after the addition of the monomers to the polymerization mixture.

**16.** The use of the composition as an adhesive for the hot or cold sealing of packaging.

**17.** A method of joining two substrates, wherein

- the two substrates have been coated, at the locations where adhesive bonding is to take place, with a composition according to any one of claims 1 to 15 and
- the two substrates are contacted, if desired with exertion of pressure,
- the temperature in the coated composition being less than 40°C (cold sealing).

**18.** A double-sidedly coated support, wherein the support on one side (hereinafter referred to as the facing side) has an outer layer of the composition according to any one of claims 1 to 15 and on the other side (hereinafter referred to as the reverse side) has an outer layer of a release coating.

**19.** The use of the support according to claim 18 for producing packaging.

**Revendications**

**1.** Utilisation d'une composition non collante ou peu collante à 20°C comme adhésif, qui peut être collé avec lui-même (appelé dans la suite, en abrégé, autoadhésif), pour le scellage à chaud ou à froid, où "peu collant(e)" signifie qu'un support en poly(téréphtalate d'éthylène) revêtu par la composition présente une adhérence sur l'acier à 20°C inférieure à 0,5 N/2,5 cm.

**2.** Utilisation selon la revendication 1, **caractérisée en ce qu'**un support en polyéthylène revêtu par la composition présente une adhérence sur l'acier à 20°C inférieure à 0,5 N/2,5 cm.

**3.** Utilisation selon l'une quelconque des revendications 1 ou 2, **caractérisée en ce que** la composition contient une dispersion polymère aqueuse comme liant.

**4.** Utilisation selon l'une quelconque des revendications 1 ou 2, **caractérisée en ce que** le polymère dispersé est constitué à raison d'au moins 60% en poids par ce qu'on appelle des monomères principaux, choisis parmi les (méth)acrylates d'alkyle en $C_1$ à $C_{20}$, les esters vinyliques d'acides carboxyliques contenant jusqu'à 20 atomes de carbone, les aromatiques de vinyle comprenant jusqu'à 20 atomes de carbone, les nitriles éthyléniquement insaturés, les halogénures de vinyle, les vinyléthers d'alcools contentant 1 à 10 atomes de carbone, les hydrocarbures aliphatiques comprenant 2 à 8 atomes de carbone et une ou deux doubles liaisons ou des mélanges de ces monomères.

**5.** Utilisation selon l'une quelconque des revendications 1 à 3, **caractérisée en ce que** le polymère est constitué à raison de plus de 60% en poids de (méth)acrylates d'alkyle en $C_1$ à $C_{20}$.

**6.** Utilisation selon l'une quelconque des revendications 1 à 4, **caractérisée en ce que** la température de transition vitreuse de tous les monomères à partir desquels le polymère est constitué, est de -50 à +10°C, calculée selon Fox.

**7.** Utilisation selon l'une quelconque des revendications 1 à 5, **caractérisée en ce que** le polymère dispersé est obtenu par polymérisation en émulsion à plusieurs étapes.

**8.** Utilisation selon l'une quelconque des revendications 1 à 6, **caractérisée en ce que** la polymérisation est réalisée en au moins deux étapes successives dans le temps, où les différentes étapes se distinguent par la température de transition vitreuse calculée selon Fox ($T_g$) des monomètres qui polymérisent dans ces étapes (également appelée Tg de l'étape en abrégé) et la Tg de la derrière étape est supérieure à 0°C.

**9.** Utilisation selon l'une quelconque des revendications 1 à 7, **caractérisée en ce que** la Tg de la dernière étape est supérieure d'au moins 5°C à la Tg de l'étape précédente.

**10.** Utilisation selon l'une quelconque des revendications 1 à 8, **caractérisée en ce que** la Tg des étapes augmente de la première à la dernière étape.

**11.** Utilisation selon l'une quelconque des revendications 1 à 9, **caractérisée en ce que** la polymérisation est réalisée en deux étapes, où 60 à 99% en ponds des monomères sont polymérisés dans une première étape et la température de transition vitreuse calculée selon Fox des monomères de cette étape est de -50 à +5°C et 1 à 40% en poids des monomères sont polymérisés dans une deuxième étape, où la température de transition vitreuse calculée selon Fox des monomères de cette étape est de 20 à 125°C et la température de transition vitreuse des monomètres de la 2ème étape est supérieure d'au moins 5°C à celle de la première étape.

**12.** Utilisation selon l'une quelconque des revendications 1 à 10, **caractérisée en ce que** la polymérisation est réalisée en au moins trois étapes, où la proportion pondérale des étapes présentant une Tg supérieure à 0°C est au total de 5 à 40% en poids.

**13.** Utilisation selon l'une quelconque des revendications 1 à 11, **caractérisée en ce que** la polymérisation est réalisée en trois étapes, où les quantités des monomères et les Tg sont comme suit :

| | | | |
|---|---|---|---|
| 1ère étape : | 50 à 90% en poids, | Tg (°C) : | -50 à +20 |
| 2ème étape : | 2 à 15% en poids, | Tg (°C) : | -20 à + 30 |
| 3ème étape : | 2 à 15% en poids, | Tg (°C) : | 0 à +125 |

et la Tg de la 3ème étape est supérieure d'au moins 5°C à celle de la 2ème étape et celle de la 2ème étape est supérieure d'au moins 5°C à celle de la 1ère étape.

**14.** Utilisation selon l'une quelconque des revendications 1 à 11, **caractérisée en ce que** la polymérisation est réalisée en quatre étapes, où les quantités des monomères et les Tg sont comme suit :

| | | | |
|---|---|---|---|
| 1ère étape : | 50 à 80% en poids, | Tg (°C) : | -50 à +20 |
| 2ème étape : | 2 à 15% en poids | Tg (°C) | -20 à +30 |
| 3ème étape : | 2 à 15% en poids | Tg (°C) | 0 à 60 |
| 4ème étape : | 2 à 15% en poids | Tg (°C) | 20 à 125 |

et la Tg de la 4ème étape est supérieure d'au moins 5°C à celle de la 3ème étape et celle de la 3ème étape est supérieure d'au moins 5°C à celle de la 2ème étape et celle de la 2ème étape est supérieure d'au moins 5°C à celle de la 1ère étape.

**15.** Utilisation selon l'une quelconque des revendications 1 à 13, **caractérisée en ce que** la polymérisation des monomères des différentes étapes est réalisée pendant ou directement après l'addition des monomères au mélange de polymérisation.

**16.** Utilisation de la composition comme adhésif pour les scellages à chaud ou à froid d'emballages.

**17.** Procédé pour assembler deux substrats, **caractérisé en ce que**

- les deux substrats sont revêtus aux endroits qui doivent être collés avec une composition selon l'une quelconque des revendications 1 à 15 et
- les deux substrats sont mis en contact, le cas échéant en exerçant de la pression, où
- la température dans la composition revêtue est inférieure à 40°C (scellage à froid).

**18.** Support revêtu sur deux faces, **caractérisé en ce que** le support présente sur une face (appelée face avant dans la suite) une couche extérieure de la composition selon l'une quelconque des revendications 1 à 15 et sur l'autre face (appelée face dorsale dans la suite) une couche extérieure d'un revêtement antiadhésif.

**19.** Utilisation du support selon la revendication 18 pour la fabrication d'emballages.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1420055 A
- EP 81083 A


### In der Beschreibung aufgeführte Nicht-Patentliteratur


- Handbook of Polymer Science and Technology. Marcel Dekker, Inc, 1989
- **Houben-Weyl.** Methoden der organischen Chemie, Band XIV/1, Makromolekulare Stoffe. Georg-Thieme-Verlag, 1961, vol. XIV/1, 411-420
- **Houben-Weyl.** Methoden der organischen Chemie, Band 14/1, Makromolekulare Stoffe. Georg Thieme Verlag, 1961, vol. 14/1, 192-208
- **W. Mäschtle.** *Makromolekulare Chemie,* 1984, vol. 185, 1025-1039